# FASCICULE DE BREVET EUROPEEN

(11) **EP 3 252 408 B1**
(45) Date de publication et mention de la délivrance du brevet: **05.12.2018**
(21) Numéro de dépôt: 17171790.3
(22) Date de dépôt: 18.05.2017
(51) Int. Cl.: F25J 1/00, C10L 3/10, C10G 5/06, F25J 3/02

(54) **PROCÉDÉ DE PURIFICATION DE GAZ NATUREL ET DE LIQUÉFACTION DE DIOXYDE DE CARBONE**
VERFAHREN ZUR REINIGUNG VON ERDGAS UND ZUR VERFLÜSSIGUNG VON KOHLENDIOXID
METHOD FOR PURIFYING NATURAL GAS AND FOR LIQUEFYING CARBON DIOXIDE

(30) Priorité: 02.06.2016 FR 1654995
(43) Date de publication de la demande: 06.12.2017
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: COSTA DE BEAUREGARD, Pierre, 92130 ISSY LES MOULINEAUX (FR); MURINO, Michele, 94500 CHAMPIGNY SUR MARNE (FR); PICHOT, Delphine, 75011 PARIS (FR)
(74) Mandataire: Grout de Beaufort, François-Xavier

(56) Documents cités:
- EP-A2- 3 048 400
- WO-A1-2015/098124
- WO-A1-2017/013329
- US-A- 3 702 063
- US-A1- 2004 255 616
- US-A1- 2011 126 451
- US-A1- 2011 174 016

## Description

La présente invention concerne un procédé de liquéfaction d'un courant d'hydrocarbures tel que le gaz naturel en particulier dans un procédé pour la production de gaz naturel liquéfié et de CO₂ liquide, conformément au préambule de la revendication 1 et connu du document WO2015/098124 A1.

Sur des usines de liquéfaction de gaz naturel typiques, des courants réfrigérants sont utilisés pour produire le froid à différents niveaux d'un échangeur de chaleur principal en se vaporisant contre le courant d'hydrocarbures à liquéfier (typiquement le gaz naturel).

La présente invention concerne en particulier un procédé d'intégration thermique entre une unité de liquéfaction de gaz naturel et unité de purification/liquéfaction de CO₂.

Il est souhaitable de liquéfier le gaz naturel pour un certain nombre de raisons. A titre d'exemple, le gaz naturel peut être stocké et transporté sur de longues distances plus facilement à l'état liquide que sous forme gazeuse, car il occupe un volume plus petit pour une masse donnée et n'a pas besoin d'être stocké à une pression élevée.

Typiquement, le gaz naturel contient des hydrocarbures et du CO₂ (0,5% à 5% mol environ). Afin d'éviter le gel de ce dernier au cours de la liquéfaction du gaz naturel, il convient de le retirer. Un moyen permettant de retirer le CO₂ du courant de gaz naturel est par exemple un lavage aux amines situé en amont d'un cycle de liquéfaction.

Le lavage aux amines sépare le CO₂ du gaz d'alimentation par un lavage du courant de gaz naturel par une solution d'amines dans une colonne d'absorption. La solution d'amines enrichie en CO₂ est récupérée en cuve de cette colonne d'absorption et est régénérée à basse pression dans une colonne de distillation (ou stripping en anglais). En tête de cette colonne de distillation, un gaz acide riche en CO₂ est rejeté. Ainsi le traitement du courant de gaz naturel par un lavage aux aminés. Ainsi le courant de gaz naturel par un lavage aux amines rejette un flux concentré en CO₂ « gaz acide », le plus souvent directement émis à l'atmosphère.

Sur des liquéfacteurs de gaz naturel (50,000 tonnes par an à 10 millions de tonnes par an), la quantité de CO₂ émis est suffisante (quantité de CO₂ émis pouvant aller jusqu'à 200 tonnes par jour) et il est possible de purifier ce « gaz acide» riche en CO₂ en CO₂ alimentaire.

En effet, dans le domaine alimentaire, conformément à la législation en rigueur, pour pouvoir être commercialisé, le CO₂ produit doit répondre à des spécifications strictes en termes de qualité et de pureté. Ainsi, par exemple, toute trace d'hydrocarbures ou de dérivés soufrés doit être éliminée (typiquement teneur inférieure au ppm volumique).

Cette purification est effectuée grâce à une unité dédiée de purification de CO₂ nécessitant l'installation d'un cycle frigorifique dédié (typiquement un système de réfrigération fonctionnant à l'ammoniac par exemple).

La fonction du cycle frigorifique dit « groupe de froid » consiste à apporter le froid nécessaire au procédé de purification/liquéfaction du CO₂.

Typiquement une unité standard de CO₂ contient les étapes suivantes :
- Etape 1 : Compression du CO₂ impur jusqu'à une pression comprise entre 15 et 50 bar abs.
- Etape 2 : Purification du CO₂ par exemple par des procédés mettant en oeuvre des adsorbants régénératifs, des absorbants ou de catalyseur pour éliminer toute présence d'eau, de mercure, d'hydrocarbures et de dérivés soufrés (liste d'impuretés non exhaustive).
- Etape 3 : Distillation des incondensables pour séparer en particulier l'oxygène et l'azote du CO₂ produit.

Ainsi, classiquement dans une unité de purification/liquéfaction de CO₂, il est nécessaire d'apporter du froid à trois niveaux de température :
1. Froid vers -20°C/-30°C utilisé pour l'étape 3 décrite au paragraphe précédent.
2. Froid vers 5°C utilisé pour l'étape 2.
3. Froid à température ambiante pour refroidir le CO₂ impur en étape 1.

Le condenseur de la colonne de distillation mise en oeuvre à l'étape 3 représente environ 50% du total des besoins en froid. Ce froid peut être apporté via un cycle frigorifique dédié (typiquement à l'ammoniac ou au propane) couplé éventuellement d'un système de refroidissement à l'eau.

Le système de production de frigories représente un coût important de l'unité de purification et de liquéfaction du CO₂ et ajoute de la complexité de mise en oeuvre sur le site de mise en oeuvre du procédé ce qui représente une contrainte.

Une solution existante consiste à dissocier les deux unités (liquéfaction de gaz naturel et purification de CO₂) ce qui nécessite la mise en place de deux systèmes de production de frigories, un pour l'unité de liquéfaction de gaz naturel et un pour l'unité de purification de CO₂.

Les inventeurs de la présente invention ont alors mis au point une solution permettant de résoudre le problème soulevé ci-dessus, à savoir minimiser l'investissement dans un système de production de frigories dans l'unité de purification/liquéfaction de *CO₂* et donc d'optimiser les dépenses d'investissement tout en gardant une efficacité optimale pour la liquéfaction du gaz naturel dans l'unité de liquéfaction.

En outre, typiquement, le gaz naturel contient des hydrocarbures « lourds » et des dérivés aromatiques. Par hydrocarbures lourds on entend hydrocarbures ayant plus de quatre atomes de carbone dont notamment des hydrocarbures ayant plus de six atomes de carbone. Les dérivés aromatiques sont des composées cycliques comme le benzène, le xylène ou le toluène par exemple.

Afin d'éviter le gel de certains hydrocarbures lourds et des dérivés aromatiques comme le benzène par exemple au cours de la liquéfaction du gaz naturel, il convient de les retirer à une température suffisamment élevée pour éviter tout risque de formation de solide.

Une solution existante est d'envoyer le gaz naturel "chaud" (c'est-à-dire avant l'entrée dans un échangeur de liquéfaction) dans une colonne de lavage où il est lavé et débarrassé des ses constituants lourds dont le benzène. Le courant gazeux en sortie de tête de cette colonne, épuré en composés lourds, est ensuite envoyé dans un échangeur de liquéfaction où il se condense. Une sortie intermédiaire dans l'échangeur permet de récupérer un débit liquide issu de la condensation partielle du gaz naturel, et sert à faire le reflux en tête de colonne.

L'inconvénient de cette solution est que le lavage d'une colonne à température ambiante avec un liquide cryogénique, de plus à l'équilibre thermodynamique car typiquement issu d'un pot de condensation partielle, entraine une vaporisation instantanée très importante qui traduit une mauvaise intégration thermique du système et donc une mauvaise efficacité.

De plus, la composition et les conditions opératoires du gaz naturel à traiter peuvent évoluer au cours de la vie de l'unité et le reflux liquide en tête de colonne peut ne pas être suffisant si seulement dépendant d'une condensation partielle.

L'invention se propose de résoudre les problèmes décrits précédemment liés à l'abattement des hydrocarbures lourds et des dérivés aromatiques en particulier du benzène présent dans le gaz naturel.

La présente invention a pour objet un procédé de production de gaz naturel liquéfié et de dioxyde de carbone (CO₂) liquide à partir d'un gaz d'alimentation de gaz naturel contenant du dioxyde de carbone et riche en hydrocarbures comprenant au moins 10 ppm molaire d'hydrocarbures ayant au moins six atomes de carbone, comprenant au moins les étapes suivantes :
- Etape a) : séparation d'un gaz d'alimentation de gaz naturel, contenant des hydrocarbures et du dioxyde de carbone dans une unité de traitement, en un courant gazeux enrichi en CO₂ et un courant de gaz naturel ;
- Etape b) : Refroidissement dudit gaz naturel à une température comprise entre -20°C et -60°C par échange thermique avec au moins un réfrigérant dans un échangeur de chaleur ;
- Etape c) : Epuration en composés contenant au moins six atomes de carbone du gaz partiellement liquéfié à l'étape a) dans une colonne de lavage contenant une tête de colonne dans son extrémité la plus haute et une cuve de colonne dans son extrémité la plus basse pour former, en tête de colonne de lavage, un courant gazeux contenant moins de 5 ppm en volume de composés contenant au moins six atomes de carbone et, en cuve de colonne de lavage, un courant liquide enrichi en composés contenant au moins cinq atomes de carbone ;
- Etape d) : Condensation au moins partielle dudit courant gazeux issu de l'étape c) dans un échangeur de chaleur pour former un courant diphasique ;
- Etape e) : Séparation dudit courant diphasique issu de l'étape d) dans un pot séparateur de phases à une température comprise entre -60°C et -80°C pour former un courant gazeux en tête de pot et un courant liquide en cuve de pot ;
- Etape f) : Utilisation d'une première partie du courant liquide issu de l'étape e) comme reflux en tête de colonne de lavage ;
- Etape g) : Condensation du courant gazeux issu de l'étape e) par échange thermique dans un échangeur de chaleur à une température inférieure à -100°C pour former un gaz liquéfié contenant moins de 5 ppm en volume de composés contenant au moins six atomes de carbone.
- Etape h) : Liquéfaction du courant gazeux enrichi en CO₂ issu de l'étape a) par échange de chaleur avec une deuxième partie du courant liquide issu de l'étape e).

L'objet de la présente invention est de coupler thermiquement une unité de liquéfaction d'un gaz riche en hydrocarbures, typiquement du gaz naturel, avec une unité de purification/liquéfaction de CO₂.

Par couplage thermique, on entend mise en commun des moyens de production de frigories pour assurer le bilan thermique des deux unités, typiquement compresseur de cycle de réfrigération, et éventuellement un système turbine/surpresseur dans le cas de cycles azote.

Par système turbine/surpresseur on entend une turbine mécaniquement couplée (via un arbre commun) à un compresseur mono-étagé. La puissance générée à travers la turbine étant directement transmise au compresseur mono-étagé.

Cette intégration thermique se matérialise par la mise en commun toute colonne, échangeur thermique, unité ou autre agencement adapté (typiquement un échangeur thermique) où des courants liés au procédé de liquéfaction de gaz naturel et des courants liés au procédé de purification/liquéfaction du CO₂ échangent thermiquement.

Le procédé objet de la présente invention permet de se passer du groupe de froid initialement nécessaire pour liquéfier le CO₂ et de soutirer le froid directement du liquéfacteur de gaz naturel. Cette intégration thermique permet ainsi de se passer d'un équipement dans l'unité de purification de CO₂.

L'intégration proposée permet de fournir du froid aux trois niveaux de température nécessaires.

Selon d'autres modes de réalisation, l'invention a aussi pour objet :
- Un procédé tel que défini précédemment, caractérisé en ce que le gaz d'alimentation comprend de 0,1% molaire à 5% molaire de CO₂
- Un procédé tel que défini précédemment, caractérisé en ce que le courant gazeux issu de l'étape c) et le gaz naturel liquéfié issu de l'étape d) contiennent moins de 1 ppm molaire de composés contenant au moins six atomes de carbone.
- Un procédé tel que défini précédemment, caractérisé en ce que le courant gazeux enrichi en CO₂ issu de l'étape a) comprend au moins 95% molaire de CO₂.
- Un procédé tel que défini précédemment, caractérisé en ce que ladite unité de traitement mise en oeuvre à l'étape a) est une unité de lavage aux amines.
- Un procédé tel que défini précédemment, caractérisé en ce que lesdits hydrocarbures ayant au moins six atomes de carbone comportent une majorité de benzène.
- Un procédé tel que défini précédemment, caractérisé en ce que la température de mise en oeuvre de l'étape b) est comprise entre -20°C et -40°C.
- Un procédé tel que défini précédemment, caractérisé en ce que la deuxième partie du courant liquide issu de l'étape e) ayant servi à liquéfier courant enrichi en CO₂ lors de l'étape g) est ensuite réinjectée en cuve de colonne de lavage.

Le besoin frigorifique d'une unité de liquéfaction de gaz naturel étant généralement plus important que le besoin frigorifique d'une unité de purification/liquéfaction de CO₂, il est pertinent de profiter de la capacité disponible des machines (compresseurs et/ou turbine/surpresseurs) de l'unité de liquéfaction de gaz naturel pour assurer au moins partiellement le besoin frigorifique de l'unité de purification/liquéfaction de CO₂ et notamment limiter l'investissement en machinerie de l'unité de purification/liquéfaction de CO₂.

En particulier, l'investissement incrémental pour augmenter la capacité de liquéfaction d'un liquéfacteur d'hydrocarbures est bien inférieur à l'investissement incrémental pour augmenter la capacité de production liquide d'une unité de purification/liquéfaction de CO₂.

En outre, d'autres étapes de traitement intermédiaires entre la séparation courant hydrocarbures/CO₂ et la liquéfaction des hydrocarbures peuvent être réalisées. Le courant d'hydrocarbures à liquéfier est généralement un flux de gaz naturel obtenu à partir de champs de gaz naturel, des réservoirs de pétrole ou d'un réseau de gaz domestique distribué via des pipelines.

Habituellement, le flux de gaz naturel est composé essentiellement de méthane.

De préférence, le courant d'alimentation comprend au moins 80% mol de méthane. En fonction de la source, le gaz naturel contient des quantités d'hydrocarbures plus lourds que le méthane, tels que par exemple l'éthane, le propane, le butane et le pentane ainsi que certains hydrocarbures aromatiques. Le flux de gaz naturel contient également des produits non-hydrocarbures tels que H₂O, N₂, CO₂, H₂S et d'autres composés soufrés, le mercure et autres.

Le flux d'alimentation contenant le gaz naturel est donc prétraité avant d'être l'introduit dans l'échangeur de chaleur. Ce prétraitement comprend la réduction et/ou l'élimination des composants indésirables tels que le CO₂ et le H₂S, ou d'autres étapes telles que le pré-refroidissement et/ou la mise sous pression. Etant donné que ces mesures sont bien connues de l'homme de l'art, elles ne sont pas davantage détaillées ici.

Dans le procédé objet de la présente invention, il est essentiel de prétraiter le courant de gaz naturel afin d'extraire un courant enrichi en CO₂ qui sera lui-même liquéfié grâce au système de production de frigories de l'unité de liquéfaction du gaz naturel.

L'expression "gaz naturel" telle qu'utilisée dans la présente demande se rapporte à toute composition contenant des hydrocarbures dont au moins du méthane. Cela comprend une composition « brute » (préalablement à tout traitement ou lavage), ainsi que toute composition ayant été partiellement, substantiellement ou entièrement traitée pour la réduction et/ou élimination d'un ou plusieurs composés, y compris, mais sans s'y limiter, le soufre, le dioxyde de carbone, l'eau, le mercure et certains hydrocarbures lourds et aromatiques.

L'échangeur de chaleur peut être tout échangeur thermique, toute unité ou autre agencement adapté pour permettre le passage d'un certain nombre de flux, et ainsi permettre un échange de chaleur direct ou indirect entre une ou plusieurs lignes de fluide réfrigérant, et un ou plusieurs flux d'alimentation.

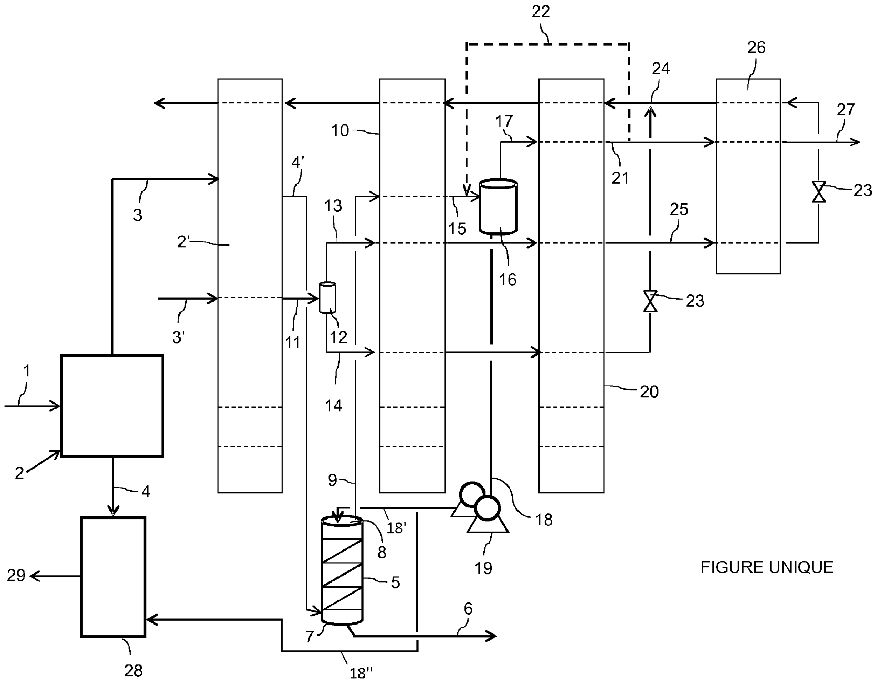

L'invention sera décrite de manière plus détaillée en se référant à la figure qui illustre le schéma d'un mode de réalisation particulier d'une mise en oeuvre d'un procédé selon l'invention.

Sur la figure, un flux d'alimentation de gaz naturel 1 contenant du CO₂ est introduit dans une unité de traitement 2 dans laquelle ledit flux 1 est séparé en au moins deux courants gazeux 3 et 4.

Le flux d'alimentation de gaz naturel 1 contient par exemple de 0,1 à 5% molaire de CO₂.

Le premier courant 3 est un courant de gaz naturel appauvri en CO₂. Le deuxième courant 4 est un courant enrichi en CO₂.

L'unité de traitement 2 est par exemple une unité d'absorption chimique, en particulier une unité de lavage aux amines (type MDEA, MEA, ...) qui permet de produire du CO₂ pur (ou concentré) à basse pression (typiquement légèrement supérieur à la pression atmosphérique). Par CO₂ pur, on entend un courant contenant plus de 95% molaire de CO₂ sur une base sèche.

Le courant de gaz naturel 3 appauvri en CO₂ est introduit dans l'échangeur principal 2' d'une unité de liquéfaction de gaz naturel afin d'être liquéfié.

La pression de ce courant gazeux est par exemple comprise entre 25 et 60 bar absolus. Typiquement, le courant gazeux 3 contient entre 30 ppm en volume et 500 ppm en volume de benzène, usuellement moins de 100 ppm en volume. Le courant gazeux 3 est refroidi par échange thermique dans l'échangeur de chaleur 2' au contact d'un réfrigérant. L'échangeur de chaleur 2' est alimenté par au moins un courant de réfrigérant 3'. Par exemple ce courant peut être composé d'un courant de réfrigérant mixte. La composition et les conditions opératoires du réfrigérant mixte sont ajustées à l'hydrocarbure à liquéfier.

Le courant de gaz naturel 3 appauvri en CO₂ introduit dans l'échangeur principal 2' d'une unité de liquéfaction de gaz naturel est par exemple liquéfié selon le procédé décrit dans les lignes suivantes.

Le courant de gaz naturel refroidi à une température comprise entre -20°C et -70°C, typiquement comprise entre -35°C et -40°C en sortie 4' d'échangeur 2' est introduit dans une colonne de lavage 5 dans laquelle les produits lourds sont séparés du gaz naturel. Par produits lourds on entend les hydrocarbures ayant plus de quatre atomes de carbone et les composés aromatiques dont notamment le benzène.

Un courant liquide 6 contenant tout (au ppm en volume près) le benzène du courant gazeux initial 1 est évacué en cuve 7 de colonne 5.

En tête 8 de colonne 5, un courant gazeux 9 comprenant moins de 1 ppm en volume de benzène est récupéré pour être introduit dans un deuxième échangeur de chaleur 10 qui peut être préférentiellement une deuxième section de l'échangeur de chaleur 2'.

Le courant 11 de réfrigérant mixte récupéré en sortie de l'échangeur de chaleur 2' est introduit dans un pot séparateur de phases 12 produisant un courant gazeux 13 contenant les éléments légers du réfrigérant en tête de pot 12 et un courant liquide 14 contenant les éléments lourds du réfrigérant en cuve de pot 12. Ces deux courants 13 et 14 alimentent le deuxième échangeur de chaleur 10 (ou deuxième étage de l'échangeur 2').

Le courant gazeux 9 contenant moins de 1 ppm en volume de benzène introduit dans le deuxième échangeur de chaleur 10 (ou deuxième section de l'échangeur 2) est condensé au moins partiellement. Le courant diphasique 15 en sortie du deuxième échangeur de chaleur 10 (ou deuxième section de l'échangeur 2') est introduit dans un pot séparateur de phases 16 afin de produire une courant gazeux 17 en tête de pot 16 et un courant liquide 18 en cuve de pot 16. La température est alors typiquement comprise entre -70°C et -75°C.

Une première partie 18' du courant liquide 18 alimente la tête 8 de la colonne de lavage 5. En fonction de l'installation du pot 16 par rapport à la colonne 5, une paire 19 de pompes de relevage peut être présente afin d'aspirer le courant liquide 18' pour effectuer le reflux en tête 8 de colonne 5.

Il est à noter que le reflux liquide (courant 18') peut ne pas être suffisant et que dans ce cas, il est possible de refroidir le pot 16 en injectant du gaz naturel liquide à l'entrée du pot diphasique (ligne 22). Cette ligne 22 est importante car elle permet de contrôler le débit de reflux liquide dans la colonne 5 et donc la teneur en benzène du produit à liquéfier. Comme la composition et les conditions opératoires du gaz naturel peuvent évoluer au cours de la vie de l'unité, le débit de reflux nécessaire peut ainsi être optimisé, ainsi que l'énergie de liquéfaction.

Il est existe au moins deux variantes pour cette solution:
- Variante n°1 : Pour simplifier l'échangeur principal, il est possible de « doucher » directement la tête de colonne 5 avec du gaz naturel liquide (courant 22) mais le débit de gaz naturel liquide 22 est alors plus important et cette option peut être coûteuse en énergie de liquéfaction.
- Variante n°2 : pour diminuer le débit de gaz naturel liquide nécessaire, il est aussi possible de doucher la tête du pot séparateur 16 et ainsi de purifier le gaz naturel par deux reflux successifs.

Le courant gazeux 17 est introduit dans un troisième échangeur de chaleur 20 qui peut être préférentiellement une troisième section de l'échangeur 2' afin d'être refroidi à une température inférieure à -110°C, par exemple comprise entre -110°C et -115°C. Le courant 21 ainsi refroidi peut-être en partie ponctionné et former un courant 22 qui sera recyclé en étant introduit avec le courant 15 dans le pot séparateur de phases 16.

En effet, selon un mode particulier du procédé de liquéfaction du gaz naturel 1 objet de l'invention, les réfrigérants liquides 14 et 25 sont soutirés puis, ensuite, détendus, par exemple à l'aide de vannes 23, avant d'être réintroduits en 24 et re-vaporisés dans la ligne d'échange 20 et 26 en face du gaz naturel 17 se liquéfiant.

Ainsi, un courant de gaz naturel liquide peut être ponctionné 22 à ce niveau (plus froid que le pot 16 séparateur de phases faisant le reflux de la colonne 5) et recyclé dans le pot 16 pour augmenter le liquide 18' de reflux en cas de manque de ce dernier, tout en limitant la perte d'efficacité par vaporisation instantanée.

Enfin, le courant de gaz 21 est introduit dans un échangeur de chaleur 26 afin de produire un courant de gaz naturel liquéfié 27, produit épuré en composés lourds et en aromatiques dont typiquement le benzène issu du procédé de liquéfaction et de purification objet de la présente invention.

Le deuxième courant gazeux 4 enrichi en CO₂ issu de l'unité de traitement 2 est liquéfié dans une unité de purification/liquéfaction de CO₂ 28 par échange de chaleur avec une deuxième partie 18" du courant liquide 18 issu de la cuve du pot séparateur 16, utilisé comme fluide frigorigène.

L'unité de liquéfaction/purification 28 comprend typiquement des moyens de compression, des moyens de purification et des moyens de liquéfaction, par exemple une colonne de distillation munie d'un moyen de condensation alimenté en fluide frigorigène.

Ainsi, le deuxième courant gazeux 4 enrichi en CO₂ issu de l'unité de traitement 2 est comprimé à moyenne pression (typiquement 25 Bar abs), refroidi, purifié (élimination de l'H₂O, des Hydrocarbures lourds, des dérivés soufrés en particulier) puis renvoyé dans une colonne de distillation qui sépare les incondensables en tête du CO₂ liquide 29 pur récupéré en cuve.

Pour assurer le froid nécessaire au bon fonctionnement de l'unité de purification/liquéfaction de CO₂ 28, le fluide frigorigène (c'est à dire, ici, le courant liquide 18") circule entre l'unité de purification/liquéfaction de CO₂ 28 et l'unité de liquéfaction de gaz naturel. Ainsi grâce à cette intégration thermique on évite un cycle frigorigène dédié à l'unité de purification/liquéfaction de CO₂.

Un courant 29 comprenant plus de 95% molaire de CO₂ liquéfié, de préférence plus de 99% molaire est extrait de cette unité 28 et pourra être utilisé pour différentes applications, par exemple dans le secteur alimentaire. De préférence, le courant 29 contient plus de 99,5% molaire de CO₂.

## Revendications

1. Procédé de production de gaz naturel liquéfié (27) et de dioxyde de carbone (CO₂) liquide (29) à partir d'un gaz d'alimentation (1) de gaz naturel contenant du dioxyde de carbone et riche en hydrocarbures comprenant au moins 10 ppm molaire d'hydrocarbures ayant au moins six atomes de carbone, comprenant au moins les étapes suivantes :
- Etape a): séparation d'un gaz d'alimentation (1) de gaz naturel, contenant des hydrocarbures et du dioxyde de carbone dans une unité de traitement (2), en un courant gazeux enrichi en CO₂ (4) et un courant de gaz naturel (3) ;
- Etape b) : Refroidissement dudit gaz naturel (3) à une température comprise entre -20°C et -60°C par échange thermique avec au moins un réfrigérant (3') dans un échangeur de chaleur (2') ;
- Etape c) Epuration en composés contenant au moins six atomes de carbone du gaz partiellement liquéfié à l'étape a) dans une colonne (5) de lavage contenant une tête (8) de colonne (5) dans son extrémité la plus haute et une cuve (7) de colonne (5) dans son extrémité la plus basse pour former, en tête (8) de colonne de lavage (5), un courant (9) gazeux contenant moins de 5 ppm en volume de composés contenant au moins six atomes de carbone et, en cuve (7) de colonne de lavage (5), un courant (6) liquide enrichi en composés contenant au moins cinq atomes de carbone ;
- Etape d) : Condensation au moins partielle dudit courant (9) gazeux issu de l'étape c) dans un échangeur (10, 2') de chaleur pour former un courant diphasique (15) ;
- Etape e) : Séparation dudit courant diphasique (15) issu de l'étape d) dans un pot (16) séparateur de phases à une température comprise entre -60°C et -80°C pour former un courant (17) gazeux en tête de pot et un courant (18) liquide en cuve de pot (16) ;
- Etape f) : Utilisation d'une première partie (18') du courant liquide (18) issu de l'étape e) comme reflux en tête (8) de colonne de lavage (5) ;
- Etape g) : Condensation du courant (17) gazeux issu de l'étape e) par échange thermique dans un échangeur de chaleur (20, 2') à une température inférieure à -100°C pour former un gaz (21) liquéfié contenant moins de 5 ppm en volume de composés contenant au moins six atomes de carbone,
**caractérisé en ce que** le procédé comprend l'étape suivante:
- Etape h) : Liquéfaction du courant gazeux enrichi en CO₂ (4) issu de l'étape a) par échange de chaleur avec une deuxième partie (18") du courant liquide (18) issu de l'étape e).

2. Procédé selon la revendication précédente **caractérisé en ce que** le gaz d'alimentation (1) comprend de 0,1% molaire à 5% molaire de CO₂

3. Procédé selon l'une des revendications précédentes **caractérisé en ce que** le courant gazeux issu de l'étape c) et le gaz naturel liquéfié issu de l'étape d) contiennent moins de 1 ppm molaire de composés contenant au moins six atomes de carbone.

4. Procédé selon l'une des revendications précédentes, **caractérisé en ce que** le courant gazeux enrichi en CO₂ issu de l'étape a) comprend au moins 95% molaire de CO₂.

5. Procédé selon l'une des revendications précédentes, **caractérisé en ce que** ladite unité de traitement mise en oeuvre à l'étape a) est une unité de lavage aux aminés.

6. Procédé selon l'une des revendications précédentes **caractérisé en ce que** lesdits hydrocarbures ayant au moins six atomes de carbone comportent une majorité de benzène.

7. Procédé selon l'une quelconque des revendications précédentes **caractérisé en ce que** la température de mise en oeuvre de l'étape b) est comprise entre -20°C et -40°C.

8. Procédé selon l'une quelconque des revendications précédentes **caractérisé en ce que** la deuxième partie (18") du courant liquide (18) issu de l'étape e) ayant servi à liquéfier courant enrichi en CO₂ lors de l'étape g) est ensuite réinjectée en cuve (7) de colonne de lavage (5).

## Patentansprüche

1. Verfahren zur Herstellung von verflüssigtem Erdgas (27) und flüssigem Kohlendioxid (CO₂) (29) aus einem Versorgungsgas (1) von Erdgas, enthaltend das Kohlendioxid und reich an Kohlenwasserstoffen, umfassend mindestens 10 molare ppm Kohlenwasserstoffe, die mindestens sechs Kohlenstoffatome aufweisen, das mindestens die folgenden Schritte umfasst:
- Schritt a): Trennen eines Versorgungsgases (1) von Erdgas, enthaltend Kohlenwasserstoffe und Kohlendioxid in einer Behandlungseinheit (2) in einen Gasstrom, angereichert mit CO₂ (4), und einen Erdgasstrom (3);
- Schritt b): Abkühlen des Erdgases (3) auf eine Temperatur, die zwischen -20 °C und -60 °C liegt, durch Wärmetausch mit mindestens einem Kühlmittel (3') in einem Wärmetauscher (2');
- Schritt c): Reinigen in Verbindungen, enthaltend mindestens sechs Kohlenstoffatome des teilweise in Schritt a) verflüssigten Gases, in einer Waschsäule (5), enthaltend einen Kopf (8) einer Säule (5) an ihrem obersten Ende und einen Sumpf (7) einer Säule (5) an ihrem untersten Ende, um im Kopf (8) einer Waschsäule (5) einen gasförmigen Strom (9), der weniger als 5 Volumen-ppm Verbindungen enthält, die mindestens sechs Kohlenstoffatome enthalten und, im Sumpf (7) einer Waschsäule (5), einen flüssigen Strom (6), angereichert mit Verbindungen, die mindestens fünf Kohlenstoffatome enthalten, zu bilden;
- Schritt d): mindestens teilweises Kondensieren des gasförmigen Stromes (9), der aus Schritt c) stammt, in einem Wärmetauscher (10, 2'), um einen zweiphasigen Strom (15) zu bilden;
- Schritt e): Trennen des zweiphasigen Stroms (15), der aus Schritt d) stammt, in einem Topf (16) zur Phasentrennung bei einer Temperatur, die zwischen -60 °C und -80 °C liegt, um einen gasförmigen Strom (17) am Kopf des Topfs und einen flüssigen Strom (18) im Sumpf des Topfs (16) zu bilden;
- Schritt f): Verwenden eines ersten Teils (18') des flüssigen Stroms (18), der aus Schritt e) stammt, als Rückfluss am Kopf (8) der Waschsäule (5);
- Schritt g): Kondensieren des gasförmigen Stromes (17), der aus Schritt e) stammt, durch Wärmetausch in einem Wärmetauscher (20, 2') bei einer Temperatur von weniger als -100 °C, um ein verflüssigtes Gas (21) zu bilden, das weniger als 5 Volumen-ppm Verbindungen enthält, die mindestens sechs Kohlenstoffatome enthalten, **dadurch gekennzeichnet, dass** das Verfahren den folgenden Schritt umfasst:
- Schritt h): Verflüssigen des gasförmigen Stromes, angereichert mit CO₂, (4) der aus Schritt a) stammt, durch Wärmeaustausch mit einem zweiten Teil (18") des flüssigen Stroms (18), der aus Schritt e) stammt.

2. Verfahren nach dem vorstehenden Anspruch, **dadurch gekennzeichnet, dass** das Versorgungsgas (1) von 0,1 Mol-% bis 5 Mol-% CO₂ umfasst.

3. Verfahren nach einem der vorstehenden Ansprüche, **dadurch gekennzeichnet, dass** der gasförmige Strom, der aus Schritt c) stammt, und das verflüssigte Erdgas, das aus Schritt d) stammt, weniger als 1 molares ppm Verbindungen enthält, die mindestens sechs Kohlenstoffatome enthalten.

4. Verfahren nach einem der vorstehenden Ansprüche, **dadurch gekennzeichnet, dass** der gasförmige Strom, angereichert mit CO₂, der aus Schritt a) stammt, mindestens 95 Mol-% CO₂ umfasst.

5. Verfahren nach einem der vorstehenden Ansprüche, **dadurch gekennzeichnet, dass** die Behandlungseinheit, die in Schritt a) eingesetzt wird, eine Einheit zum Waschen mit Aminen ist.

6. Verfahren nach einem der vorstehenden Ansprüche, **dadurch gekennzeichnet, dass** die Kohlenwasserstoffe, die mindestens sechs Kohlenstoffatome aufweisen, einen überwiegenden Anteil von Benzol umfassen.

7. Verfahren nach einem der vorstehenden Ansprüche, **dadurch gekennzeichnet, dass** die Temperatur, die in Schritt b) eingesetzt wird, zwischen -20 °C und -40 °C liegt.

8. Verfahren nach einem der vorstehenden Ansprüche, **dadurch gekennzeichnet, dass** der zweite Teil (18") des flüssigen Stroms (18), der aus Schritt e) stammt, der dazu gedient hat, den Strom, angereichert mit CO₂ in Schritt g), zu verflüssigen, in der Folge wieder in den Sumpf (7) der Waschsäule (5) eingespritzt wird.

## Claims

1. Method for producing liquefied natural gas (27) and liquid carbon dioxide (CO₂) (29) from a feed gas (1) of a hydrocarbon-enriched natural gas containing carbon dioxide, comprising at least 10 molar ppm of hydrocarbons having at least six carbon atoms, comprising at least the following steps:
- Step a): Separation of a feed gas (1) of natural gas, containing hydrocarbons and carbon dioxide in a processing unit (2), into a CO₂-enriched gas stream (4) and a natural gas stream (3);
- Step b): Cooling of said natural gas (3) at a temperature of between -20°C to-60°C by heat exchange with at least one refrigerant (3') in a heat exchanger (2');
- Step c) Purification of the partially-liquefied gas of step a) into compounds containing at least six carbon atoms inside a washing column (5) containing a top (8) of the column (5) at the upper end thereof and a sump (7) of the column (5) at the lower end thereof to form, at the top (8) of the washing column (5) a gas stream (9) containing less than 5ppm by volume of compounds containing at least six carbon atoms and, in the sump (7) of the washing column (5), a liquid stream (6) enriched in compounds containing at least five carbon atoms;
- Step d): Condensation, at least partially, of said gas stream (9) obtained from step c) in a heat exchanger (10, 2') to form a two-phase flow (15);
- Step e): Separation of said two-phase flow (15) obtained from step d) in a liquid-vapour separator (16) at a temperature of between -60°C and -80°C to create a gas stream (17) at the top of a separator and a liquid stream (18) in the sump of the separator (16);
- Step f): Use of a first portion (18') of the liquid stream (18) obtained from step e) as reflux at the top (8) of the washing column (5);
- Step g): Condensation of the gas stream (17) obtained from step e) by heat exchange in a heat exchanger (20, 2') at a temperature of less than -100°C to form a liquefied gas (21) containing less than 5ppm by volume of compounds containing at least six carbon atoms, **characterised in that** the method comprises the following step:
- Step h): Liquefaction of the CO₂-enriched gas stream (4) obtained from step a) by heat exchange with a second portion (18") of the liquid stream (18) obtained from step e).

2. Method according to the preceding claim, **characterised in that** the feed gas (1) comprises from 0.1% molar to 5% molar of CO₂.

3. Method according to one of the preceding claims, **characterised in that** the gas stream obtained from step c) and the natural liquefied gas obtained from step d) contain less than 1 molar ppm of compounds comprising at least six carbon atoms.

4. Method according to one of the preceding claims, **characterised in that** the CO₂-enriched gas stream obtained from step a) comprises at least 95% molar of CO₂.

5. Method according to one of the preceding claims, **characterised in that** said processing unit implemented in step a) is an amine scrubbing unit.

6. Method according to one of the preceding claims, **characterised in that** said hydrocarbons with at least six carbon atoms comprise a majority of benzene.

7. Method according to any one of the preceding claims, **characterised in that** the implementation temperature of step b) is between -20°C and -40°C.

8. Method according to any one of the preceding claims, **characterised in that** the second portion (18") of the liquid stream (18) from step e), having been used to liquefy the CO₂-enriched stream during step g), is then re-injected into the sump (7) of the washing column (5).
